(19) **Europäisches Patentamt / European Patent Office / Office européen des brevets**

(11) **EP 1 623 284 B1**

(12) **EUROPÄISCHE PATENTSCHRIFT**

(45) Veröffentlichungstag und Bekanntmachung des Hinweises auf die Patenterteilung:
**06.08.2008 Patentblatt 2008/32**

(21) Anmeldenummer: **04716986.7**

(22) Anmeldetag: **04.03.2004**

(51) Int Cl.:
*G05B 13/04* (2006.01)

(86) Internationale Anmeldenummer:
**PCT/AT2004/000070**

(87) Internationale Veröffentlichungsnummer:
**WO 2004/102287 (25.11.2004 Gazette 2004/48)**

(54) **VERFAHREN ZUR OPTIMIERUNG VON FAHRZEUGEN UND VON MOTOREN ZUM ANTRIEB SOLCHER FAHRZEUGE**

METHOD FOR OPTIMIZING VEHICLES AND ENGINES USED FOR DRIVING SUCH VEHICLES

PROCEDE D'OPTIMISATION DE VEHICULES ET DE MOTEURS SERVANT A L'ENTRAINEMENT DE TELS VEHICULES

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.05.2003 AT 7312003**

(43) Veröffentlichungstag der Anmeldung:
**08.02.2006 Patentblatt 2006/06**

(73) Patentinhaber: **AVL List GmbH**
**8020 Graz (AT)**

(72) Erfinder: **SCHÖGGL, Peter**
**A-8151 Hitzendorf (AT)**

(74) Vertreter: **Babeluk, Michael**
**Patentanwalt**
**Mariahilfer Gürtel 39/17**
**1150 Wien (AT)**

(56) Entgegenhaltungen:
WO-A-02/25385     US-A- 5 754 738
US-A- 6 079 258     US-B1- 6 434 454

- MARKEL T ET AL: "ADVISOR: a systems analysis tool for advanced vehicle modeling" JOURNAL OF POWER SOURCES, ELSEVIER SEQUOIA S.A. LAUSANNE, CH, Bd. 110, Nr. 2, 22. August 2002 (2002-08-22), Seiten 255-266, XP004393625 ISSN: 0378-7753

**Beschreibung**

Die Erfindung betrifft ein Verfahren zur Optimierung von Fahrzeugen und von Motoren zum Antrieb solcher Fahrzeuge. Von der vorliegenden Erfindung werden selbstverständlich auch Subsysteme wie der Antriebsstrang oder elektronische Motorsteuerungseinheiten umfasst.

Bei modernen Kraftfahrzeugen ist die Optimierung der Einstellung ein schwieriges Gebiet, da die Anzahl der Freiheitsgrade außerordentlich hoch ist. Dies betrifft sowohl die Abstimmung von Rennfahrzeugen, die primär dazu dienen soll, maximale Wetterbewerbsfähigkeit, d.h. beste Rundenzeit bei fahrbarer Abstimmung, zu erreichen, als auch die Einstellung von Serienfahrzeugen im Hinblick auf Komfort, Fahrbarkeit, Kraftstoffverbrauch und Abgasemissionen. Die Schwierigkeit der Abstimmung resultiert aus der Tatsache, dass eine Vielzahl von Einstellparametern variiert werden kann, sich die Änderung von Einstellparametern in komplexer Weise üblicherweise in mehreren Aspekten eine Änderung des Verhaltens des Kraftfahrzeuges verursacht. Die Optimierung der Einstellung wird daher in der Praxis zumeist von qualifizierten Technikern durchgeführt, die aufgrund umfangreicher Erfahrung in der Lage sind, die Folgen von bestimmten Änderungen in der Einstellung abzuschätzen und die gewünschte Optimierung durchzuführen. Dennoch müssen im Zuge einer solchen Optimierung im Zuge eines iterativen Prozesses umfangreiche Fahrversuche unternommen werden, um die erzielten Zwischenergebnisse zu verifizieren und gegebenenfalls zu korrigieren. Der Fahrerfeedback wird in geeigneter Weise herangezogen, um die durchzuführenden Abstimmungsmaßnahmen zu entscheiden.

Die beschriebene Vorgangsweise benötigt Test- und Versuchfahrten und eine subjektive Bewertung von Renn- oder Versuchfahrern. Oftmals sind diese Fahrten aus technischen oder aus Gründen eines vorgegebenen Reglements aber nicht möglich.

Es ist bekannt, zur Verringerung von Testfahrten mit realen Fahrzeugen bzw. von Untersuchungen auf Prüfständen, Simulationsmodelle einzusetzen, die zumindest teilweise Optimierungsaufgaben übernehmen können. Beispiele solcher Verfahren sind in der EP 0 877 309 B, der WO 00/32465, US 6,434,454 B oder der EP 0 474 944 B gegeben. Solche Simulationsmodelle können jedoch stets nur Teilaspekte der zu optimierenden Abstimmung beleuchten, wie etwa die optimale Berechnung eines virtuellen Sensors als Datenquelle für die Motorelektronik, wie dies in der oben erwähnten EP 0 877 309 B beschrieben ist.

Weiters zeigt die US 6,079,258 A ein Verfahren und eine Vorrichtung, mit der das Fahrverhalten eines Kraftfahrzeuges analysiert werden kann. Dabei werden sogenannten Triggerbedingungen definiert, die bestimmten Fahrzuständen des Fahrzeuges entsprechen. Wenn das Vorliegen der vordefinierten Triggerbedingungen erfasst wird, werden Messwerte durch empirisch erstellte Funktionen ausgewertet, um einen Fahrbarkeitsindex zu gewinnen.

Aufgabe der vorliegenden Erfindung ist es, ein Verfahren anzugeben, das in der Lage ist, nicht nur Teilaspekte der Fahrzeugabstimmung zu beleuchten, sondern in möglichst einfacher Weise eine Gesamtoptimierung durchzuführen. Dabei soll der Einsatz des realen Fahrzeuges so weit als möglich minimiert werden und es soll auch die Bewertung durch erfahrene Testingenieure weitgehend vermieden werden, um einerseits den Aufwand zu verringern und andererseits die subjektiven Komponenten so weit wie möglich auszuschalten.

Diese Aufgaben werden durch ein Verfahren gelöst, das folgende Schritte aufweist:

- Durchführen von Messungen aus dem realen Betrieb des Fahrzeuges auf der Straße oder einem Rollenprüfstand oder des Motors auf einem Motorenprüfstand;

- Parametrisieren eines Simulationsmodells, das das Fahrzeug bzw. den Motor abbildet, um rechnerisch eine Prognose über die durch die Messungen erzielten Messwerte ermitteln zu können;

- Simulation des Fahrzeuges unter Verwendung des Simulationsmodells, wobei auch mindestens ein Fahrbarkeitsindex berechnet wird, der sich aufgrund einer empirisch ermittelten Funktion aus mehreren Messwerten ergibt und der die Fahrbarkeit des Fahrzeuges in einem bestimmten Fahrzustand angibt;

- Optimierung der Einstellung des Fahrzeuges während der obigen Simulation, wobei mindestens ein Fahrbarkeitsindex in die Zielfunktion oder die Randbedingungen der Optimierung eingeht.

Wesentlich an der vorliegenden Erfindung ist die Verwendung von Fahrbarkeitsindizes oder sogenannten Driveability-Variablen. Solche Fahrbarkeitsindizes sind Werte, die sich als Funktion aus mehreren messbaren Variablen ergeben und die die Fahrbarkeit des Fahrzeugs in bestimmten Schlüsselsituationen, die auch als Triggerbedingungen bezeichnet werden, wiedergeben. Die Definition dieser Funktionen erfolgt dabei auf empirischem Weg, indem Bewertungen, die von einer Vielzahl von Testfahrern abgegeben werden, mit den berechneten Funktionswerten verglichen werden, wobei die Funktionen so lang verändert und adaptiert werden bis eine optimale Übereinstimmung zwischen den Funktionswerten und den tatsächlich vorliegenden Bewertungen erreicht wird. Die vorliegende Erfindung beruht auf der Erkenntnis, dass eine Optimierung des Fahrverhaltens bevorzugt nicht anhand von einzelnen Messwerten erfolgt, sondern eben die Fahrbarkeitsindizes mit einbezieht. Auch wenn es beispielsweise für einen Rennwagen durchaus naheliegend erscheint, eine Optimierung auf die erzielbare Rundenzeit durchzuführen, da dies das offensichtliche Maß für die Qualität des Rennwagens ist, so hat sich doch herausgestellt, dass praxisnähere Ergebnisse und letztlich erfolgreichere Strategien erreichbar sind, sofern Fahrbarkeitsindizes in die Optimierung eingehen. Dies bedeutet, dass ein Optimierungsproblem vorliegt, das eine Zielfunktion aufweist (beispielsweise die Rundenzeit), sowie eine Vielzahl von Randbedingungen. Die Randbedingungen können reglementbedingte Beschränkungen sein, wie etwas minimales Fahrzeuggewicht oder Beschränkungen hinsichtlich der Fahrzeugabmessungen, Aerodynamik und dergleichen, die können technisch physikalischer Natur sein, wie etwa Belastbarkeitsgrenzen des verwendeten Materials oder maximal zulässiger Reifenverschleiß, Kraftstoffverbrauch oder Minimalwerte für verschiedene Fahrbarkeitsindizes, die vorgeschrieben werden. Hier kann beispielsweise die Fahrbarkeit des Motors in Teillast oder bei Eingriff der Traktionskontrolle einen bestimmten Grenzwert überschreiten müssen, wobei bei Rennwagen dieser Wert für Rennen oder Training unterschiedlich sein kann. Weiters kann das Handling-Verhalten des Fahrzeugs in verschiedenen Bereichen der Strecke (Beschleunigen, Bremsen, Kurveneingang, Kurvenmitte, Kurvenausgang, und dgl.) objektiv bewertet und als Randbedingung vorgegeben werden. Alternativ dazu ist es auch möglich, ein Optimierungsproblem zu definieren, bei dem eine maximal zulässige Rundenzeit als Randbedingung vorgegeben wird und beispielsweise ein Gesamtfahrbarkeitsindex, der sich aus mehreren einzelnen Fahrbarkeitsindizes ergibt, optimiert wird.

Es ist grundsätzlich möglich, die oben beschriebene Optimierung weitgehend fahrerneutral durchzuführen, d.h., dass die vom Fahrer beeinflussbaren Variablen, wie etwa Lenkwinkel oder Gaspedalstellung passend angenommen werden, um eine Simulation zu ermöglichen. Bevorzugt ist es jedoch, das Verhalten des Fahrers explizit zu modellieren und in einem eigenen Fahrermodell abzulegen. Ein solches Fahrermodell wird dabei in sinnvoller Weise auf die zur Verfügung stehenden Fahrer einzeln abgestimmt, sofern es sich um Anwendungen im Rennsport handelt. Für Serienfahrzeuge können alternativ dazu verschiedene Fahrertypen definiert und durch ein Simulationsmodell dargestellt werden. Wesentlich an jeglicher Art des Fahrermodells ist dabei, dass das Verhalten des Fahrers vom Verhalten des Fahrzeugs abhängt. Auch in diesem Bereich hat sich gezeigt, dass Fahrbarkeitsindizes besonders gut geeignet sind, um diese Abhängigkeiten darzustellen und im Simulationsmodell abzubilden. Darüber hinaus hat es sich in ähnlicher Weise, wie beim Fahrzeug selbst als nützlich und sinnvoll herausgestellt, Fahrerbewertungsindizes zu definieren, die das Verhalten und die Qualität des Fahrers repräsentieren.

Für den Optimierungsschritt können verschiedene Optimierungsverfahren verwendet werden, die geeignet sind, komplexe Optimierungsaufgaben, wie sie hier vorliegen, zu bewältigen. Grundsätzlich kann dabei eine modellbasierte Optimierungsstrategie verwendet werden, die auch als "Full Factorial"-Verfahren bezeichnet wird. Dabei werden bei der Simulation die veränderbaren Parameter so lange variiert, bis man ein Optimum erreicht hat oder man dem Optimum in ausreichendem Ausmaß nahegekommen ist. Für die Optimierung selbst werden dabei keine besonderen Kenntnisse der Natur des Systems verwendet.

Alternativ dazu ist es möglich, sogenannte erfahrungsorientierte Optimierungsstrategien oder DOE (Design of Experiments)-Strategien einzusetzen. Dabei wird versucht, die Optimierung durch Berücksichtigung von Zusammenhängen zu beschleunigen, die aus der Kenntnis des Verhaltens des simulierten Systems folgen. Die Definition solcher Optimierungsstrategien ist aufwendiger, dafür werden im Allgemeinen schnellere Optimierungsfortschritte erzielt.

In einer besonders begünstigten Variante des erfindungsgemäßen Verfahrens wird die Optimierung im Zuge der Simulation durchgeführt, indem ausgehend von einer Anfangskonfiguration von Einstellparametern ein Simulationszyklus mit einer Mehrzahl von Simulationsläufen durchgeführt wird, in denen ein vorbestimmter, im Wesentlichen identischer Fahrzyklus durchlaufen wird, während die Einstellparameter variiert werden, um den Einfluss der Einstellparameter auf die Zielfunktion und die Randbedingungen zu ermitteln. Dies wird so durchgeführt, da eine Vielzahl von Einstellparametern verändert werden können, aber es a priori nicht bekannt ist, welchen Einfluss die einzelnen Einstellparameter auf die Zielfunktion und die Randbedingungen haben. Auf diese Weise kann die Auswirkung der Änderung jedes einzelnen Einstellparameters ceteris paribus festgestellt werden, wobei Wechselwirkungen und Synergieeffekte zwischen den einzelnen Einstellparametern vernachlässigt werden.

Besonders vorzugsweise wird auf der Basis der Ergebnisse des Simulationszyklus ein erstes Metamodell erstellt, das den Einfluss der Eingangsparameter auf die Zielfunktion und die Randbedingungen abbildet, danach auf der Basis des Metamodells ein erster Optimierungsschritt durchgeführt wird, um eine erste Optimalkonfiguration von Einstellparametern zu bestimmen, worauf ausgehend von dieser ersten Optimalkonfiguration von Einstellparametern mindestens ein weiterer Simulationszyklus durchgeführt wird, um ein weiteres Metamodell zu erstellen. Die einzelnen Simulationsläufe stellen einen beträchtlichen Rechenaufwand dar. Eine Optimierung nur auf der Basis solcher Simulationsläufe verursacht bei einigermaßen komplexen und realitätsnahen Modellen einen prohibitiv großen Rechenaufwand. Die oben erwähnte Verwendung eines Metamodells, bei dem die Zielfunktion und die Randbedingungen im Sinne einer Approximation als explizite Funktionen der Einstellparameter dargestellt werden, ermöglicht die Durchführung einer Optimierung mit wesentlich geringerem Rechenaufwand. Der wesentliche Unterschied des eigentlichen Simulationsmodells zum Metamodell besteht darin, dass sich im Simulationsmodell viele Größen als Integrale anderer Größen über die Zeit berechnen und dass die Zusammenhänge nichtlinear und interdependent sind. Überdies werden im Simulationsmodell viele Zwischengrößen verwendet, die im Grunde nicht interessieren, aber zur Darstellung des Modells benötigt werden.

Im Gegensatz dazu sind die Metamodelle einfach und geben eine direkte Beziehung zwischen den Einstellparametern und der Zielfunktion und den Randbedingungen an, ohne beispielsweise zeitliche Integrale aufzuweisen. In einer ersten Variante diese Verfahrens sind die Metamodelle lineare Modelle. Dadurch wird die Optimierung besonders vereinfacht, da die Einstellparametern für ein bestimmtes gewünschtes Ergebnis im Prinzip durch Invertieren einer Modellmatrix erhalten werden können.

Diese extreme Vereinfachung wird dadurch erkauft, dass das Metamodell nur in einer ausreichend kleinen Umgebung der Anfangskonfiguration das tatsächliche Verhalten des Systems zufriedenstellend beschreibt. Nachdem man nun aufgrund des ersten Metamodells den ersten Optimierungsschritt durchgeführt hat, der eine erste Optimalkonfiguration von Einstellparametern ergeben hat wird mindestens ein weiterer Simulationszyklus durchgeführt, um ein weiteres Metamodell zu erstellen. Dadurch werden die Fehler ausgeschaltet, die sich durch die Vereinfachungen des Metamodell ergeben. Im Allgemeinen wird somit die erste Optimalkonfiguration nicht tatsächlich optimal im Sinne des eigentlichen Simulationsmodells sein, einem solchen Optimum aber näher sein als die Anfangskonfiguration. Indem die obigen Schritte nach Bedarf wiederholt werden, kann eine beliebig genaue Annäherung an ein tatsächliches Optimum erreicht werden.

Eine verbesserte Genauigkeit der Metamodelle kann dadurch erreicht werden, dass diese Modelle solche sind, bei denen die Einstellparameter in die Zielfunktion und die Randbedingungen teilweise linear und teilweise quadratisch eingehen. Dabei wird die Tatsache ausgenützt, dass sich zumindest bei Abwesenheit von Randbedingungen ein Optimum in der Zielfunktion durch verschwindende Ableitungen der Zielgröße nach den unabhängigen Variablen, also den Einstellparametern ausdrückt, so dass ein quadratisches Modell die Umgebung des Optimums besser widerspiegelt als ein lineares Modell. Der durch den quadratischen Ansatz verursachte Mehraufwand bei der Berechnung kann verringert werden, wenn er auf Einstellparametern beschränkt wird, von denen anzunehmen ist, dass sie nicht primär durch Randbedingungen determiniert werden.

Bei einer Anwendung des erfindungsgemäßen Verfahrens im Rennsport die ist Zielfunktion im Allgemeinen eine Rundenzeit, die das Fahrzeug für das Durchfahren eines vorbestimmten Kurses benötigt. Als Rundenzeit wird hier in einem allgemeinen Sinn auch eine Segmentzeit verstanden, das ist die Fahrzeit für eine Teilstrecke eines Rundkurses. Randbedingungen ergeben sich durch das Reglement und durch Fahrbarkeitsindizes, die beispielsweise das Untersteuern global oder in einer bestimmten Kurve abbilden.

Bei der Anwendung des erfindungsgemäßen Verfahrens in der Entwicklung von Serienfahrzeugen ist beispielsweise vorgesehen, dass die Zielfunktion ein Gesamt-Fahrbarkeitsindex ist, der das Fahrverhalten des Fahrzeugs global beschreibt. Dadurch kann der Fahrkomfort in objektiv nachvollziehbarer Weise optimiert werden. Die Zielfunktion kann aber auch ein Kraftstoffverbrauchswert sein, der die Kraftstoffmenge angibt, die das Fahrzeug für das Durchfahren eines vorbestimmten Kurses benötigt, so dass die Darstellung eines verbrauchsoptimalen Fahrzeugs möglich ist.

Besonders zuverlässige Ergebnisse werden erreicht, wenn die Randbedingungen zumindest teilweise Fahrbarkeitsindizes sind, die das Verhalten des Fahrzeugs in Teilbereichen eines Simulationslaufes abbilden, wobei insgesamt alle Teilbereiche des Simulationslaufes abgedeckt sind.

In einer ersten Ausführungsvariante des erfindungsgemäßen Verfahrens wird bei den Messungen das Gesamtfahrzeug im realen. Betrieb herangezogen, um die erforderlichen Messwerte zu gewinnen. Die Messwerte werden dabei aus einer vollständig realen Situation auf der Straße gewonnen. Ein solches Verfahren ist naturgemäß mit einem relativ hohem Aufwand verbunden. Sofern bereits Daten über Teilsysteme vorliegen, kann der Aufwand daher durch sogenannte "Hardware in the loop"-Verfahren minimiert werden, bei denen Teilsysteme durch Simulationsmodelle ersetzt werden. Dabei sind beispielsweise folgende Konstellationen denkbar:

- das Fahrzeug befindet sich auf einen Rollenprüfstand: dabei müssen beispielsweise aerodynamische Effekte durch ein Simulationsmodell abgebildet werden, auch Einflussgrößen, wie Radaufhängung, Reifen und dergleichen können nicht direkt berücksichtigt werden;

- eine weitere Vereinfachung der Messungen ergibt sich, wenn der Motor des Fahrzeugs auf einem hochdynamischen Prüfstand untersucht wird. Zusätzlich zu den oben beschriebenen Variablen müssen hierbei auch alle mit dem Antriebsstrang zusammenhängenden Variablen simuliert werden;

- für Spezialuntersuchungen kann aber auch ein einzelnes Subsystem, wie etwas das Motorsteuerungsgerät getrennt untersucht werden, wobei sämtliche Variablen, die nicht direkt vom Steuergerät beeinflussbar sind, simuliert werden müssen;

Eine besonders begünstigte Ausführungsvariante des erfindungsgemäßen Verfahrens liegt vor, wenn nach der Durchführung der Messungen aus dem realen Betrieb des Fahrzeugs Änderungen am Fahrzeug definiert werden und das Simulationsmodell auf Basis des geänderten Fahrzeugs erstellt wird. In vielen Fällen liegen reale Messwerte eines Fahrzeuges auf einer bestimmten Strecke vor und es besteht die Aufgabe, das erwartete Verhalten eines in der Zwischenzeit leicht modifizierten Fahrzeuges, zu prognostizieren. Auf diese Weise ist es möglich, an einem Fahrzeug geplante Änderungen oder zwar bereits durchgeführte Änderungen, die aber noch nicht auf einer bestimmten Strecke getestet werden konnten, in dem Simulationsmodell zu berücksichtigen und die Auswirkungen dieser Änderungen zu analysieren. Ein besonderer Vorteil besteht dabei darin, dass es nicht nur möglich ist, die direkten Änderungen des ansonsten unveränderten Fahrzeuges im Hinblick auf die Fahrleistungen zu prognostizieren, sondern auch in der Simulation eine Optimierung des abgeänderten Fahrzeugs durch passende Wahl von Einstellparametern anzugeben.

Bei Bereitstellung einer entsprechenden Rechenkapazität ist es möglich, dass nach einer anfänglichen Erstellung eines Simulationsmodells während des realen Betriebs des Fahrzeugs das Parametrisieren eines Simulationsmodells Simulation des Fahrzeuges unter Verwendung des Simulationsmodells laufend in Echtzeit erfolgt. Dies kann beispielsweise währen eines Rennens sinnvoll sein, wenn zunehmender Reifenverschleiß oder dgl. berücksichtigt werden soll, um eventuell noch während des Rennens mögliche Änderungen der Einstellparameter planen und bewerten zu können. Die Optimierung der Einstellung des Fahrzeuges kann laufend in Echtzeit erfolgen um Änderungen in den Einstellparametern durchzuführen. Aber auch dann, wenn beispielsweise ein entsprechender Rechner an Bord eines Serienfahrzeugs ist, können während des Betriebs laufend Nachjustierungen der Einstellparameter durchgeführt werden, um Alterungserscheinungen und Verschleiß zu berücksichtigen. In diesem Zusammenhang ist es besonders vorteilhaft, wenn Änderungen der Einstellparameter des Fahrzeugs automatisch durchgeführt werden.

Bei dem erfindungsgemäßen Verfahren spielen folgende Variable eine Rolle:

$U_i$ Umweltparameter, wie beispielsweise Fahrbahnbeschaffenheit, Luftdruck. Es handelt sich um externe Parameter, die nicht beeinflussbar sind, jedoch in das Modell eingehen.

$E_i$ Einstellparameter: messbare Größen, die das Kraftfahrzeug charakterisieren und (zumindest prinzipiell) veränderbar sind. Beispiele: Federkennlinien, Motorkennfelder, Getriebeübersetzungen, Fahrzeuggewicht, Luftwiderstand und Ab- bzw. Auftriebswerte des Fahrzeuges

$S_i$ Simulationsparameter: das sind Größen, denen keine messbare Variable entspricht und die für die Einstellung des Simulationsmodells benötigt werden. Beispiele: Reifenkennfelder (wenn nicht bekannt), Elastizität des Antriebsstranges (wenn nicht bekannt)

$F_i(t)$ Fahrerbestimmte Größen, wie etwa Lenkwinkel, Gaspedalstellung. Diese Variablen sind naturgemäß im Zeitablauf veränderlich und deshalb als Funktionen der Zeit angegeben. Über die Fahrzeuggeschwindigkeit könnten diese Parameter auch als Funktionen des Ortes dargestellt werden.

$M_i(t)$ Messwerte, die das Verhalten des Fahrzeugs charakterisieren, und die sowohl real messbar als auch vom Simulationsmodell berechenbar sind. Beispiele: Längsbeschleunigung, Querbeschleunigung, Motortemperatur. Die vom Simulationsmodell berechneten fiktiven Messwerte können als Funktion der Umweltparameter, der Simulation der Einstellparameter, der Simulationsparameter und der fahrerbestimmten Größen, sowie der übrigen Messerwerte dargestellt werden:

$$Msim_i(t) = f(U_I, E_i, S_I, F_I(t), Msim_i(t))$$

$DR_i$ Fahrbarkeitsindizes für bestimmte Fahrmanöver und/oder Streckenteile. Die $DR_i$ werden aufgrund von vorher ermittelten empirischen Daten aus dem $M_i(t)$ bzw. dem $Msim_i(t)$ berechnet.

In der Folge wird die Erfindung anhand der in den Figuren dargestellten Ausführungsvarianten näher erläutert. Es zeigen:

Fig. 1              ein Flussdiagramm zur Erklärung des erfindungsgemäßen Verfahrens in einer ersten Ausführungsvariante;

Fig. 2              ein Blockdiagramm, das wesentlichen Komponenten bei der Durchführung der Erfindung darstellt;

Fig. 3a, 3b, 3c bis Fig. 9a, 9b, 9c     Diagramme, die das erfindungsgemäße Verfahren anhand eines vereinfachten Beispiels zeigen.

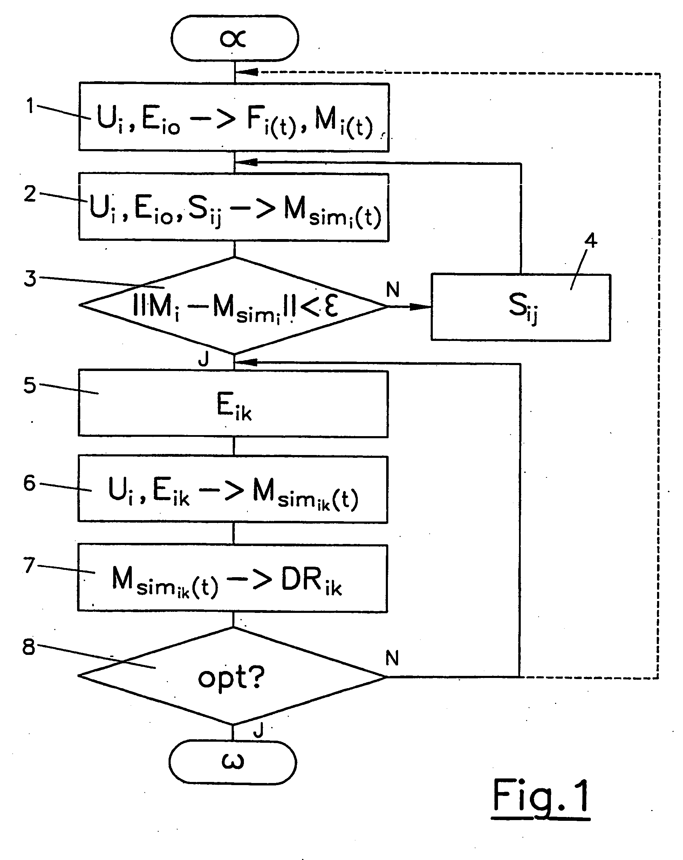

Die einzelnen Schritte des Flussdiagramms von Fig. 1 werden nun folgendermaßen erklärt:

➢ **Schritt 0: Beginn.**

➢ **Schritt 1: reale Runde:** ein Fahrzeug mit vorgegebenen Einstellparametern $E_{l0}$ wird auf der realen Rennstrecke oder einem Prüfstand betrieben, wobei $F_i(t)$ und $M_i(t)$ aufgezeichnet werden. Zusätzlich werden die Umweltparameter $U_i$ beobachtet. Diese reale Runde kann, wie oben ausgeführt, auch mit dem Vorgängermodell des Fahrzeuges gefahren worden sein.

➢ **Schritt 2: virtuelle Runde:** mit Hilfe des Simulationsmodells wird am Rechner eine Runde simuliert. In das Simulationsmodell gehen $U_i$ und $E_{l0}$ als vorgegeben ein, weiters beruht die Berechnung auf Simulationsparametern $S_{ij}$, wobei der Index j die jeweilig Version der Simulationsparameter $S_i$ nach j simulierten Runden bezeichnet. Dies bedeutet, es wird mit einem anfänglichen Satz von Simulationsparametern $S_{l0}$ begonnen, der in weiterer Folge verbessert wird.

Variante 1: Die fahrerbestimmten Größen $F_i(t)$ werden weitgehend von der realen Runde übernommen.

Variante 2: Das Fahrermodell ist Teil des Simulationsmodells (oder ein zusätzliches Simulationsmodell, was gleichbedeutend ist), und die fahrerbestimmten Größen $F_i(t)$ werden als $Fsim_i(t)$ mitsimuliert (=berechnet).

Ergebnis der Simulation ist ein Satz von virtuellen Messwerten $Msi\text{-}m_{ij}(t)$ (und ggf. $Fsim_{ij}(t)$) für die simulierte Runde j.

➢ **Schritt 3: Abfrage:** ist die Genauigkeit des Simulationsmodells ausreichend? Dies wird grundsätzlich aus dem Unterschied zwischen $M_i(t)$ und $Msim_{ij}(t)$ (und ggf. zwischen $F_i(t)$ und $Fsim_{ij}(t)$) ermittelt. Dabei wird es im Allgemeinen Bewertungsfunktionen geben, da zumeist einige Messwerte kritischer sind als andere und daher unterschiedliche Toleranzen vorliegen. Zusätzlich wird die Größe der $DR_i$ zur Berechnung der Genauigkeit herangezogen.
**Bei NEIN: Schritt 4:** Erzeugung eines neuen Satzes von Simulationsparametern $S_{ij}$ und Rückkehr zu Schritt 2. Die Berechnung der neuen $S_{ij}$ kann sicherlich rein mathematisch erfolgen (Optimierungsaufgabe ohne Kenntnis der inneren Systemzusammenhänge) oder es können Kenntnisse über die realen Zusammenhänge verwendet werden. Auch Kombinationen aus beiden sind möglich.
**Bei JA: Schritt 5.**

➢ **Schritt 5: Virtuelle Veränderung der Fahrzeugeinstellung:** die anfänglichen Einstellparameter $E_{l0}$ werden auf $E_{ik}$ verändert, wobei k ein Zähler für den jeweiligen Optimierungsschritt ist.

➢ **Schritt 6: Virtuelle Testrunde:** unter Verwendung der neuen Einstellparameter $E_{ik}$, Wie in Schritt 2 werden simulierte Messwerte berechnet, die hier mit $Msim_{ik}(t)$ bezeichnet sind, da sie nach k Optimierungsschritten vorliegen.

Variante 1: Die fahrerbestimmten Größen $F_i(t)$ werden von der realen Runde unverändert übernommen.

Variante 2: Das Fahrermodell ist Teil des Simulationsmodells (oder ein zusätzliches Simulationsmodell, was gleichbedeutend ist), und die fahrerbestimmten Größen werden mitsimuliert. Besonderer Vorteil hier: das Verhalten der Fahrers ist auf der Basis der $DR_{ik}$, das sind Fahrbarkeitsindizes (nächster Schritt), besonders leicht und realitätsnah zu prognostizieren.

➢ **Schritt 7: Drivability-Berechnung:** Berechnung von $DR_{ik}$, das sind Fahrbarkeitsindizes nach k Optimierungsschritten.

➢ **Schritt 8: Abfrage: Bewertung des Optimierungsfortschrittes:** Ist ein ausreichender Fortschritt erreicht?
**Bei NEIN:** Rückkehr zu **Schritt 5.**
**Bei JA: Ende der Prozedur** oder ggf. Rückkehr zu **Schritt 1.**

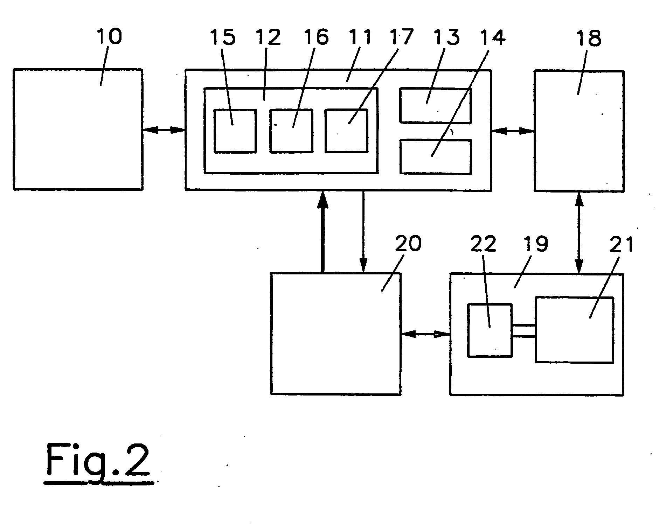

Die Fahrzeugoptimierung (Schritte 5 bis 8) stellt nichtlineare Optimierungsaufgabe mit einer Zielfunktion und mehreren Randbedingungen dar.
Das Blockdiagramm von Fig. 2 zeigt die wesentlichen beteiligten Komponenten in schematischer Weise.

Ein reales Fahrzeug 10 wird auf einer vorgegebenen Strecke betrieben. Anhand von Messwerten wird ein Simulationsmodell 11 parametrisiert, das sich intern in ein Fahrzeugmodell 12, ein Fahrermodell 13 und ein Streckenmodell 14 untergliedern lässt. Das Fahrzeugmodell 12 wiederum kann in Submodelle unterteilt sein, wie etwa ein Fahrdynamik-Modell 15, ein Aerodynamik-Modell 16 und ein Reifen-Modell 17, und nach Bedarf weitere hier nicht dargestellte Submodelle.

Mit 18 ist eine real verwendete Traktionskontrolle bezeichnet, die die am Prüfstand nicht real verfügbaren Eingangsgrößen vom Simulationsmodell 11 erhält, wie etwa die Fahrzeuggeschwindigkeit. Die Traktionskontrolle 18 steuert einen hochdynamischen Prüfstand 19 an, der seinerseits die erforderlichen realen Daten, wie etwa Motordrehzahl an die Traktionskontrolle zurückgibt. Der Prüfstand 19 besteht aus einem realen Motor 21, der an eine elektrische Bremse 22 angekoppelt ist.

Mit 20 ist die Steuerungselektronik für den Prüfstand 19 bezeichnet, die ihrerseits Daten mit dem Simulationsmodell 11 austauscht. Mit den mit dem Simulationsmodell 11 gewonnenen Daten können die Einstellparameter des Fahrzeugs 10 verändert und optimiert werden.

Aufgrund der geschlossenen Schleife zwischen Simulationsmodell 11, Traktionskontrolle 18, Prüfstand 19 und Steuerungselektronik 20 wird ein solcher Aufbau auch Closed Loop-Modell bezeichnet. Ein solcher Aufbau kann einerseits als nicht vollständig in Software realisiertes Simulationsmodell verwendet werden, um in erfindungsgemäßer Weise das reale Fahrzeug 10 zu simulieren, kann aber andererseits selbst durch Anwendung des erfindungsgemäßen Verfahrens vollständig softwaremäßig abgebildet werden, um Prüfstandsuntersuchungen einzusparen oder zu beschleunigen.

Bei vollständig softwaremäßiger Simulation des Fahrzeugs 10 ist ein hier nicht dargestelltes Submodell, das den Motor abbildet, als Teil des Simulationsmodells 11 erforderlich.

In der Folge wird ein Optimierungsvorgang unter Verwendung eines linearen Metamodells näher erläutert. Nachdem in Schritt 3 von Fig. 1 ein validiertes Simulationsmodell vorliegt, werden in Schritt 5 anstelle eines einzigen Vektors von Einstellparametern $E_{ik}$ so viele Vektoren erzeugt, wie Einstellparameter vorgesehen sind, wobei sich jeder der Vektoren $E_{ik}$ vom Vektor $E_{l0}$ dadurch unterscheidet, dass ein einziger Einstellparameter um einen vorbestimmten Wert verändert ist.

Im Schritt 6 wird dann mit jedem der Einstellparameter-Vektoren $E_{lk}$ eine virtuelle Testrunde absolviert, und es werden die Werte $Msim_{ik}(t)$ und in weitere Folge die $DR_{ik}$ gewonnen. Auf diese Weise ist es möglich, den Einfluss der einzelnen Einstellparameter isoliert zu bestimmen.

Wenn der Einstellparameter-Vektoren E beispielsweise aus 150 einzelnen Einstellwerten zusammengesetzt ist, wie etwa Flügelanstellwinkel oder Federkonstanten oder Dämpfungswerte an einzelnen Radaufhängungen, und wenn der Ergebnisvektor Msim aus 300 einzelnen Werten zusammengesetzt ist, die Zielwerte und Randbedingungen bilden, wie etwa Rundenzeit, Segmentzeiten, Kraftstoffverbrauch, Einzelfahrbarkeitsindizes, wie etwa Untersteuern in einer bestimmten Kurve und Gesamtfahrbarkeitsindizes, wie etwa Ruckeln, Untersteuern global oder ein allgemeiner Gesamtfahrbarkeitsindex, so kann man eine lineare Darstellung der folgenden Form angeben:

$$V . E = Msim$$

Dabei ist V eine Matrix mit 300 Zeilen und 150 Spalten, die das oben beschriebene Metamodell darstellt. Durch Invertieren dieser Matrix kann in einfacher Weise ein gewünschter Ergebnisvektor Msim folgendermaßen gewonnen werden:

$$E = V^{-1} Msim$$

Es ist selbstverständlich, dass aufgrund der Überbestimmtheit des Gleichungssystems nicht jeder Wert Msim genau erreicht werden kann, was aber irrelevant ist, da es sich bei den meisten Werten von Msim um Randbedingungen handelt, die im der Form von Ungleichungen vorliegen.

Mit Hilfe der obigen Gleichung kann problemlos ein Einstellparameter-Vektor E aufgefunden werden, der einen Ergebniswert-Vektor Msim ergibt, der einerseits zulässig ist, d.h. alle Randbedingungen erfüllt, der aber andererseits optimal ist, d.h. die Zielfunktion maximiert bzw. minimiert.

Dieser erste optimale Einstellparameter-Vektor E, bestehend aus den Werten $E_{l1}$ wird nun für einen weiteren Simulationszyklus herangezogen, in dem wiederum die einzelnen $E_{l1}$ nacheinander variiert werden. Diese Abfolge wird wiederholt, bis eine ausreichende Genauigkeit erreicht ist.

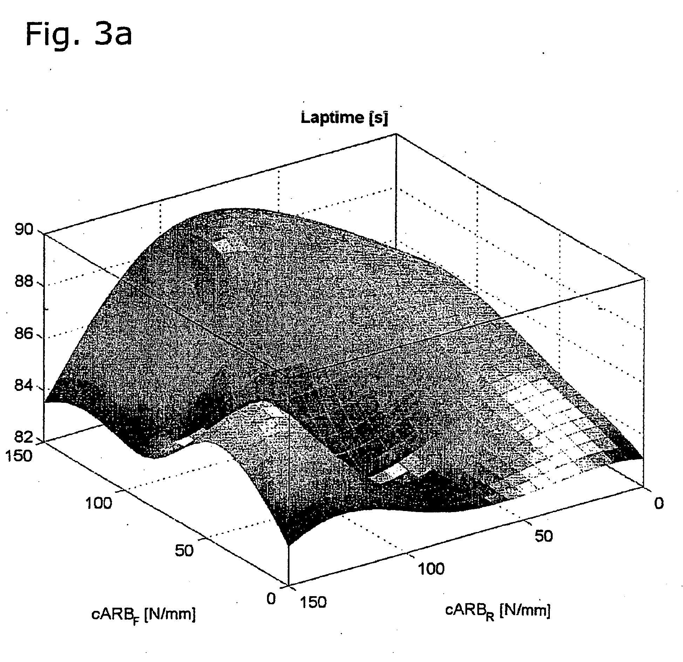

In den Fig. 3a bis Fig. 9c wird die Erfindung anhand eines vereinfachten Beispiels näher erläutert. Es wird angenommen, dass nur zwei Einstellparameter veränderlich sind, nämlich $cARB_F$ und $cARB_R$, nämlich die Federsteifigkeiten des vorderen bzw. des hinteren Stabilisators. Zu optimieren sei die Rundenzeit Laptime, und als Randbedingungen seien zwei Fahrbarkeitsindizes Understeer und Oversteer oberhalb vorbestimmter Grenzwerte zu halten. Diese Fahrbarkeitsindizes Understeer und Oversteer geben das Untersteuerverhalten bzw. Übersteuerverhalten des Fahrzeugs in vorbestimmten Fahrsituationen an.

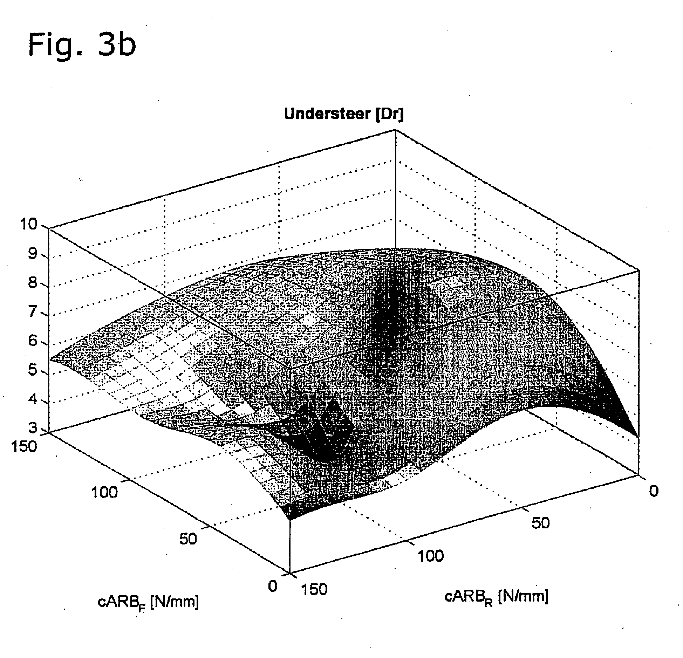

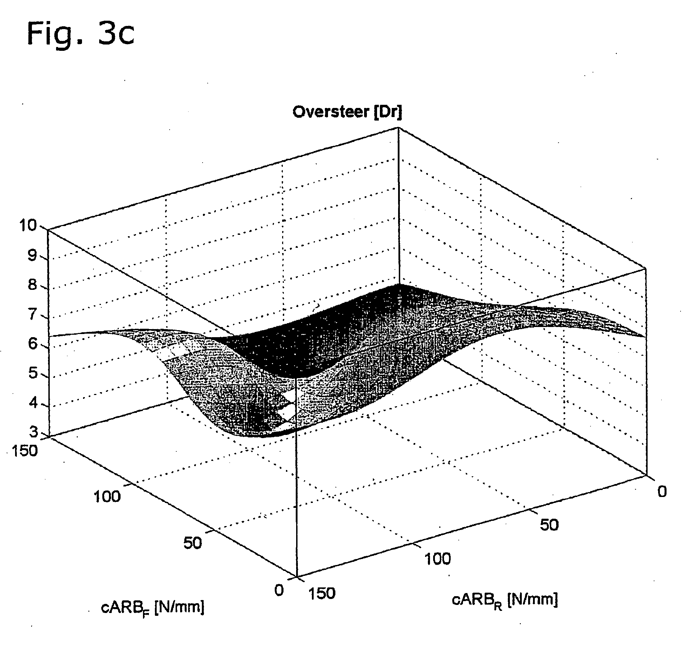

Das Diagramm von Fig. 3a zeigt die Rundenzeit Laptime als Funktion von $cARB_F$ und $cARB_R$. Die Diagramme der Fig. 3b und Fig. 3c zeigen die Fahrbarkeitsindizes Understeer und Oversteer als Funktionen von $cARB_F$ und $cARB_R$. Es ist anzumerken, dass diese Funktionen a priori nicht bekannt sind und bei Anwendung des erfindungsgemäßen Verfahrens letztlich auch niemals vollständig bekannt werden.

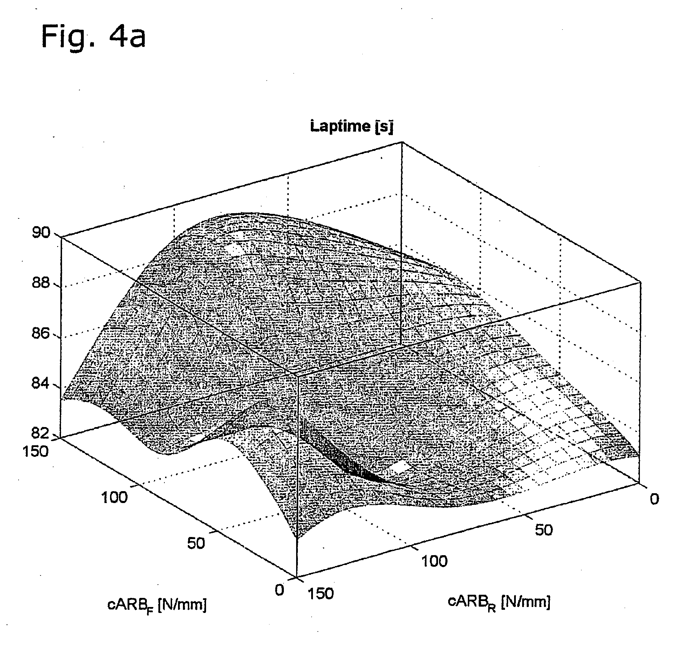

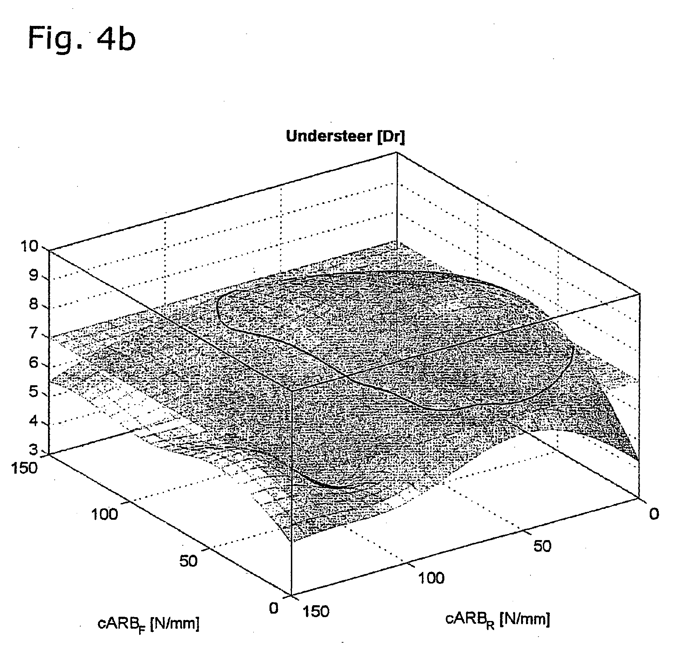

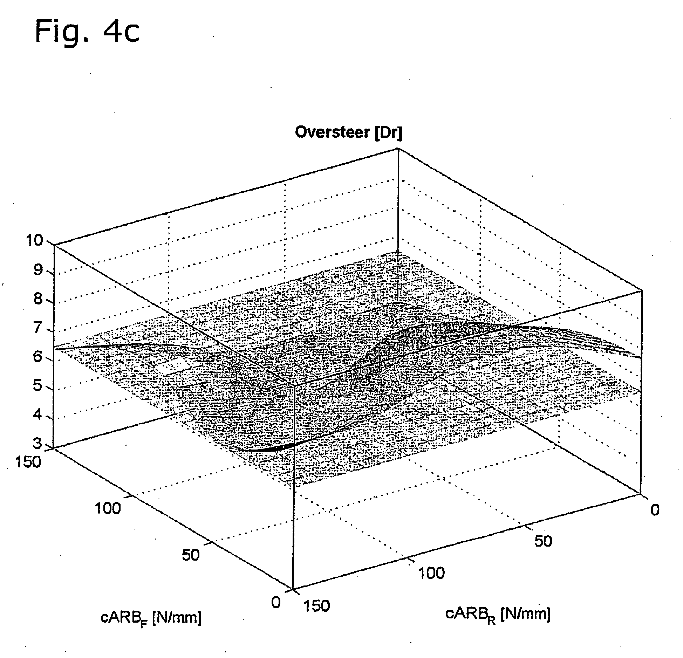

Fig. 4b und Fig. 4c zeigen nochmals die Fahrbarkeitsindizes Understeer und Oversteer als Funktionen von $cARB_F$ und $cARB_R$, wobei jedoch zusätzlich zu den Darstellungen der Fig. 3b und Fig. 3c die Grenzwerte Understeer $\geq 7$ und Oversteer $\geq 6,5$ als waagrechte Ebenen eingetragen sind. Diejenigen Wertepaare für $cARB_F$ und $cARB_R$, bei denen die obigen Bedingungen erfüllt sind, steilen den zulässigen Bereich für die Optimierung dar. Das Diagramm der Fig. 4a für die Zielfunktion Laptime ist unverändert.

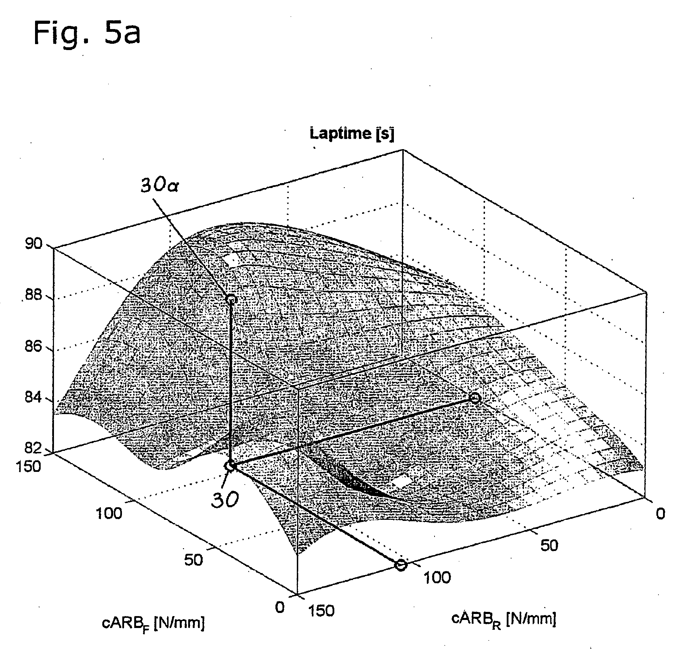

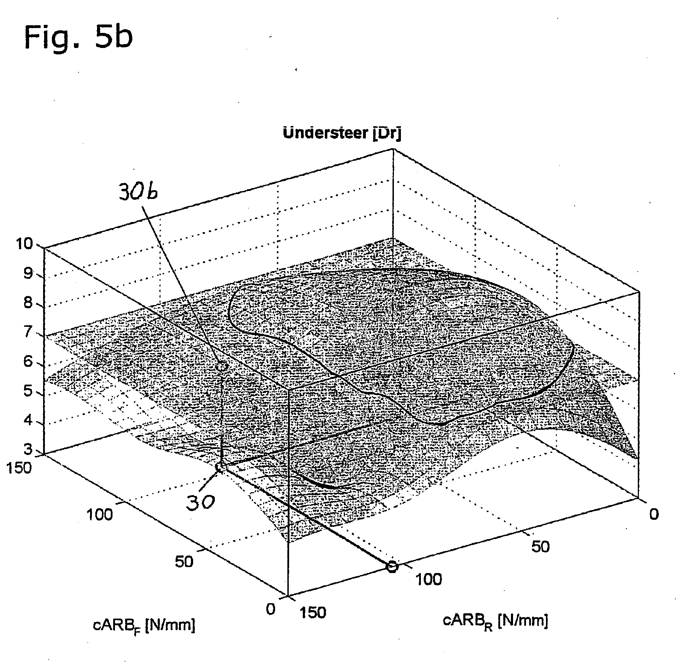

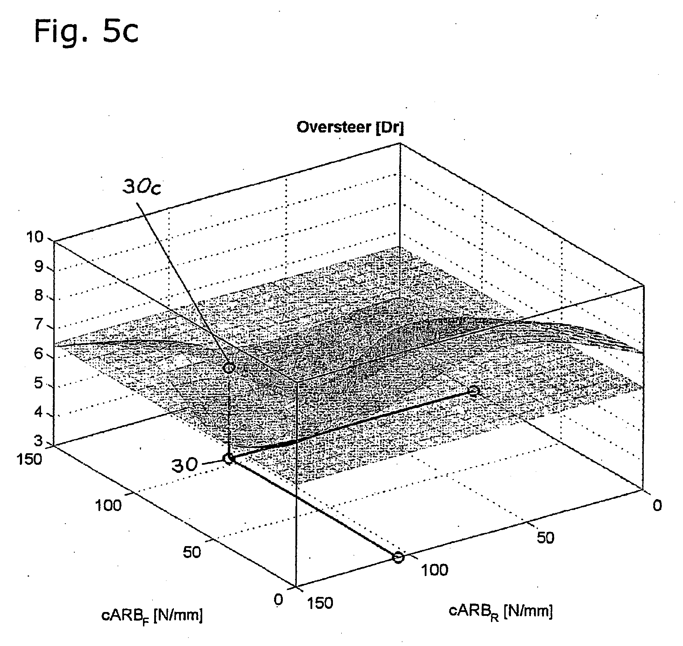

Die Fig. 5a, 5b und 5c zeigen einen Startwert 30 von $cARB_F$ und $cARB_R$ von jeweils 105 N/mm und die sich ergebenden fiktiven Messwerte Laptime, Understeer und Oversteer, die mit 30a, 30b und 30c bezeichnet sind. Diese Messwerte können grundsätzlich durch eine einzige simulierte Runde gewonnen werden. Aus den Darstellungen ist ersichtlich, dass diese Einstellparameter weder optimal noch zulässig sind. Die Unzulässigkeit ist aus Fig. 5c ersichtlich, die zeigt, dass Oversteer deutlich kleiner ist als der Grenzwert von 6,5. Die Nicht-Optimalität ist aus Fig. 5a ersichtlich, da es offensichtlich Wertepaare von $cARB_F$ und $cARB_R$ gibt, die zu niedrigeren Rundenzeiten führen.

In einer ersten Phase des Optimierungsverfahrens muss nun Zulässigkeit hergestellt werden. Es werden nun so viele Runden simuliert, wie Einstellparameter vorhanden sind, um die lokalen Gradienten der Funktionen Understeer und Oversteer zu bestimmen. Dadurch kann man ein Metamodell im oben beschriebenen Sinn erstellen, das es ermöglicht, zu gewünschten Werten für die Zielfunktion und die Randbedingungen die erforderlichen Einstellparameter anzugeben. Dieses Metamodelle ist in derjenigen Umgebung des Ausgangspunktes gültig innerhalb der die Linearisierung eine vertretbare Vereinfachung darstellt.

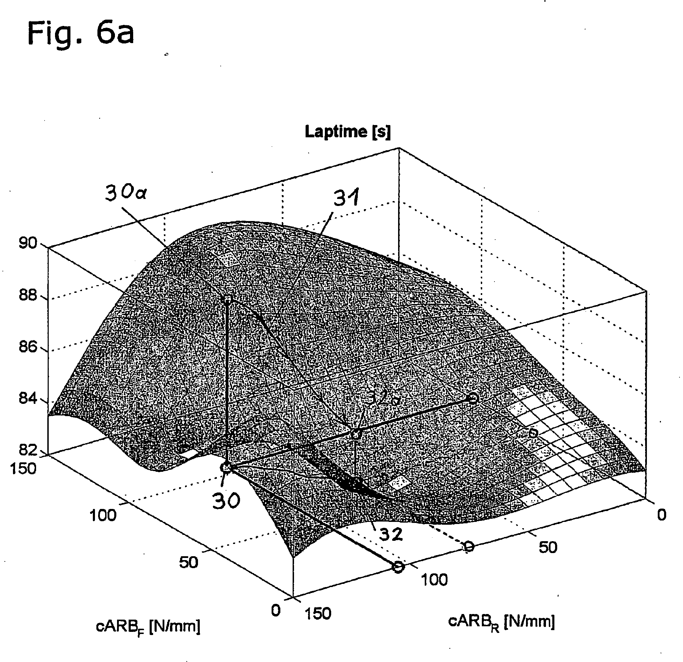

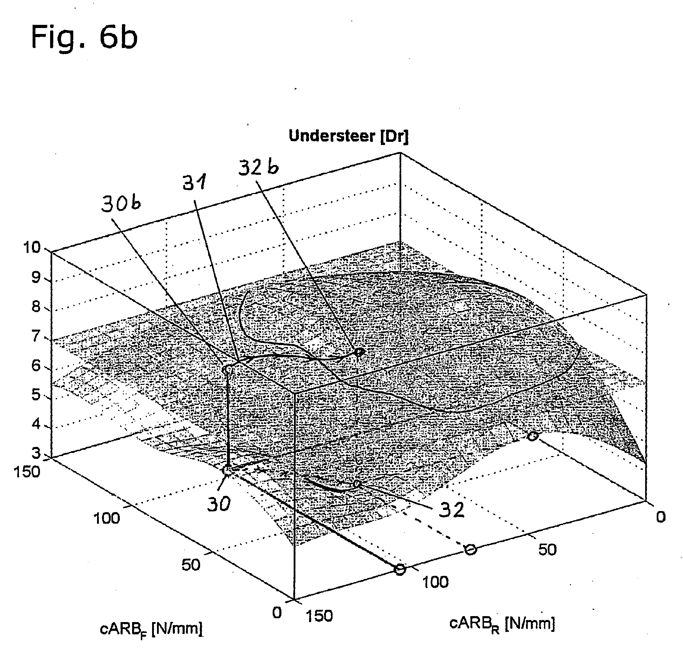

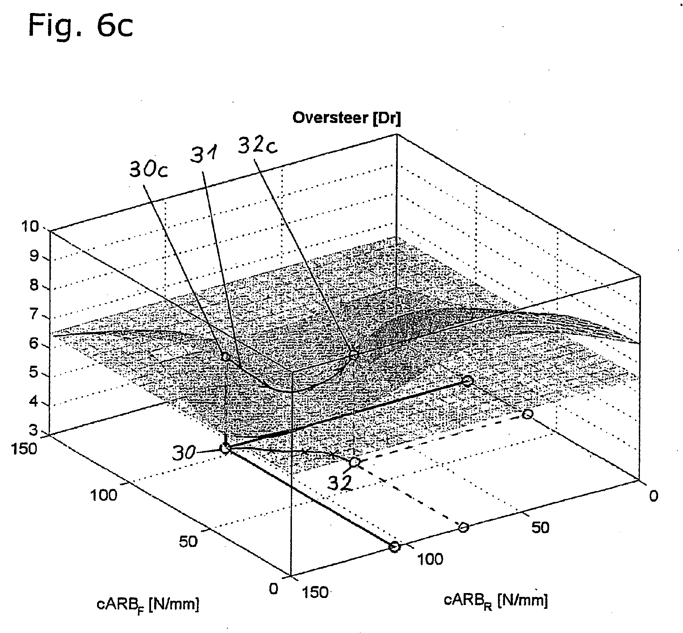

Je nach Schwierigkeit des Problems bedarf es nun eines oder mehrerer Schritte, d.h. neuer Metamodelle, einen Weg zu einem Wertepaar von $cARB_F$ und $cARB_R$ zu finden, das die gegebenen Randbedingungen erfüllt. In den Fig. 6a, 6b und 6c ist ein solcher Weg 31 eingezeichnet, der zu einem Punkt 32 bzw. zu den Punkten 32a, 32b und 32 c führt, der durch $cARB_F = 65$ N/mm und $cARB_R = 75$ N/mm definiert ist und der innerhalb des zulässigen Bereichs liegt. Nach wie vor ist diese Einstellung aber nicht optimal, wie die Fig. 6a zeigt.

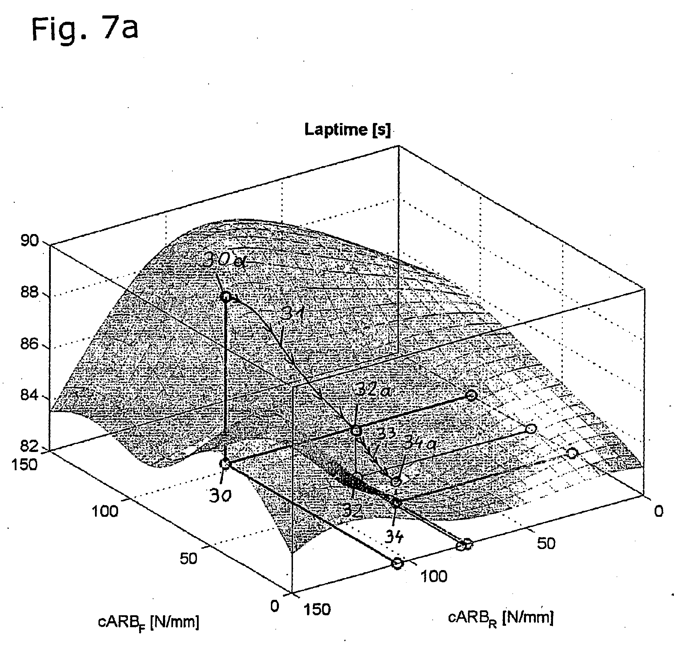

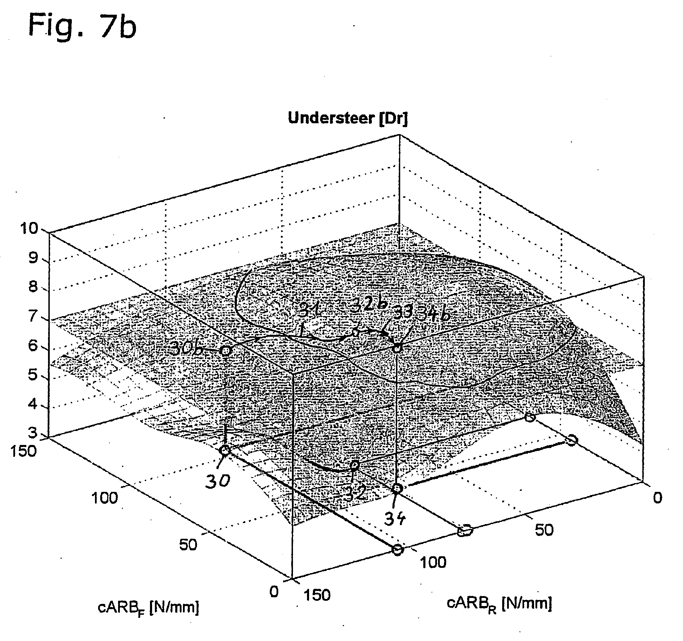

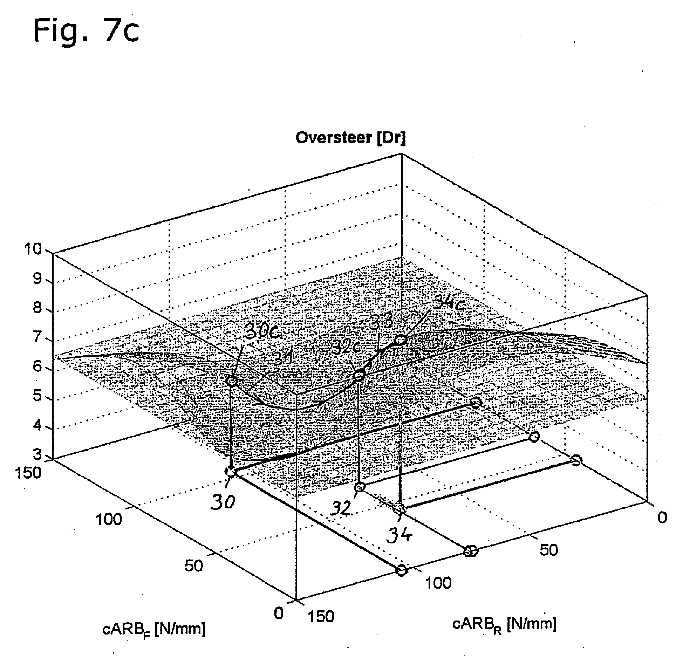

In einer zweiten Phase des Optimierungsverfahrens wird nun ausgehend von diesem zulässigen, aber nicht optimalen Punkt 32 eine Optimierung der Zielfunktion Laptime durchgeführt, indem wiederum mindestens einmal, zumeist aber mehrere Male hintereinander eine Linearisierung um den jeweils erreichten Zwischenpunkt durchgeführt wird und ein lokal optimaler Pfad bestimmt wird, wobei jedoch stets zu berücksichtigen ist, dass der zulässige Bereich nicht verlassen wird. Auf diese Weise gelangt man über den Weg 33 in den der Fig. 7a, 7b und 7c zu den Punkten 34 bzw. 34a, 34b und 34c, d.h. zu dem optimalen Ergebnis von $cARB_F = 19$ N/mm und $cARB_R = 69$ N/mm, das folgende fiktiven Messwerte ergibt:

$$\text{Laptime} \quad = \quad 83,1 \text{ s}$$

$$\text{Understeer} \quad = \quad 9,36$$

$$\text{Oversteer} \quad = \quad 7,21.$$

Es ist anzumerken, dass das oben dargestellte Konzept einer zweiphasigen Optimierung auch abgeändert werden kann. Beispielsweise ist es möglich in einer ersten Phase einen optimalen, aber unzulässigen Punkt aufzusuchen und in einer zweiten Phase die Zulässigkeit herzustellen. Es ist aber auch möglich, nach verschiedenen Konzepten einen Pfad aus nichtoptimalen unzulässigen Punkten zu verfolgen.

Das Optimierungsverfahren ist aber auch nicht auf lineare Metamodelle beschränkt. Die Verwendung quadratischer Ansätze erhöht zwar den Rechenbedarf pro Schritt, vermindert aber die Anzahl erforderlicher Schritte.

Bei einigen Einstellparametern kann es sich um nicht skalare Größen handeln, wie etwa Motorkennfelder.

Solche Kennfelder sind dem obigen Optimierungskonzept nicht unmittelbar zugänglich. Eine Einbeziehung in die erfindungsgemäße Optimierung kann dadurch erfolgen, dass zunächst eine sich aus dem Motorkennfeld abgeleitete Größe, wie etwa eine Drehmomentanforderung modelliert und und bei der Optimierung verwendet wird und danach in einem weiteren Schritt das zum jeweiligen Zeitpunkt passende Kennfeld berechnet und bei der nächsten Simulation oder beim nächsten Testlauf ausgewählt bzw. eingestellt.

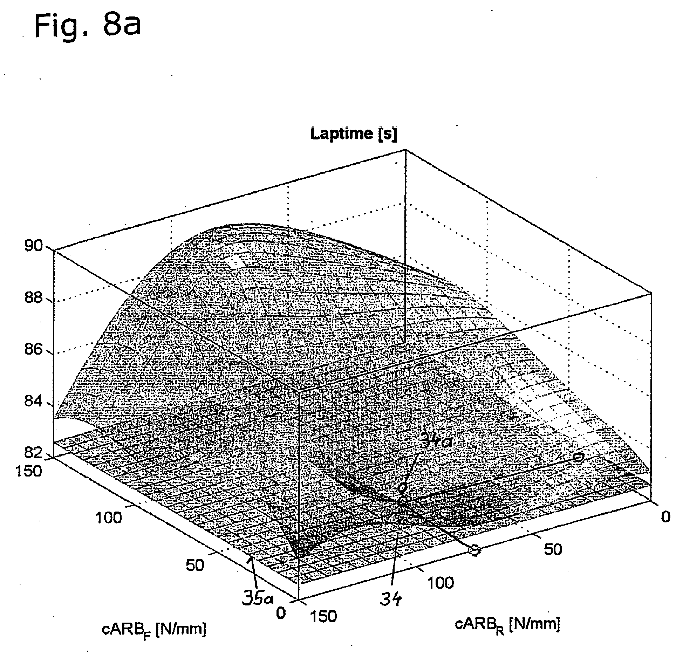

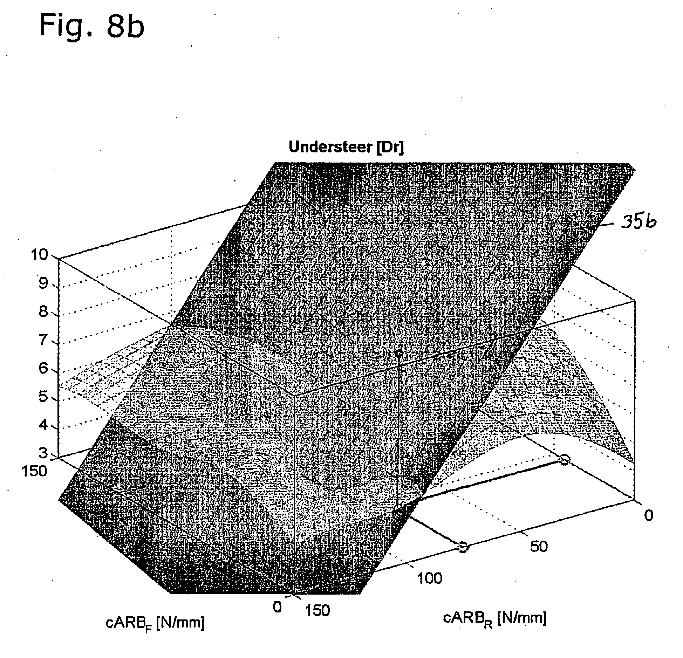

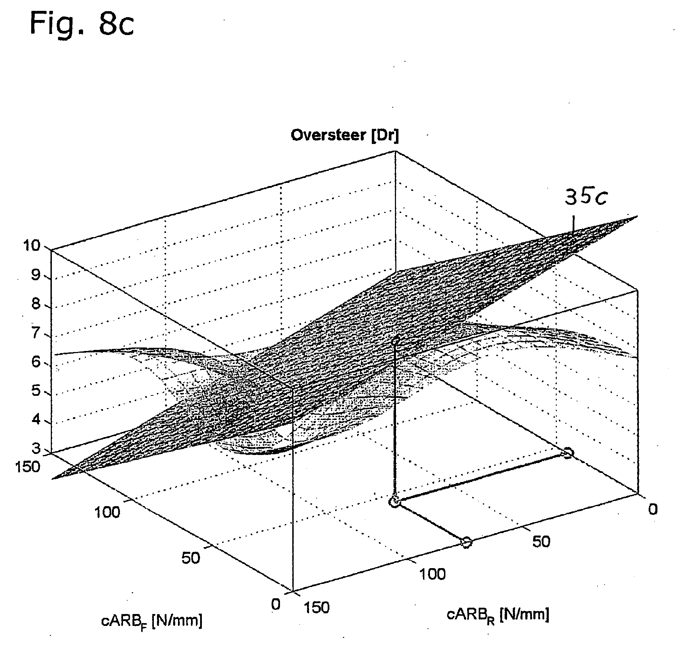

Die Diagramme der Fig. 8a, 8b und 8c zeigen nun, dass das Konzept der Linearisierung auch zur Evaluierung und Deutung der Ergebnisse vorteilhaft einsetzbar ist. Indem nochmals im Optimum eine Linearisierung durchgeführt wird, kann die Sensibilität des erreichten Ergebnisses auf Änderungen der Einstellparameter abgeschätzt werden. In Fig. 8a, 8b und 8c sind die jeweiligen Ebenen 35a, 35b und 35c eingezeichnete die das Metamodell im Optimalpunkt darstellen. Da das Optimum innerhalb des zulässigen Bereichs liegt, ist die Ebene 35a der Zielfunktion von Fig. 8a erwartungsgemäß waagrecht. Algebraisch kann man die Gradienten folgendermaßen ausdrücken:

|  | $cARB_F$ | $cARB_R$ |
|---|---|---|
| $\Delta$Laptime | 0,0000 | 0,0000 |
| $\Delta$Oversteer | 0,0621 | -0,0403 |
| $\Delta$Understeer | -0,1216 | 0,0254 |

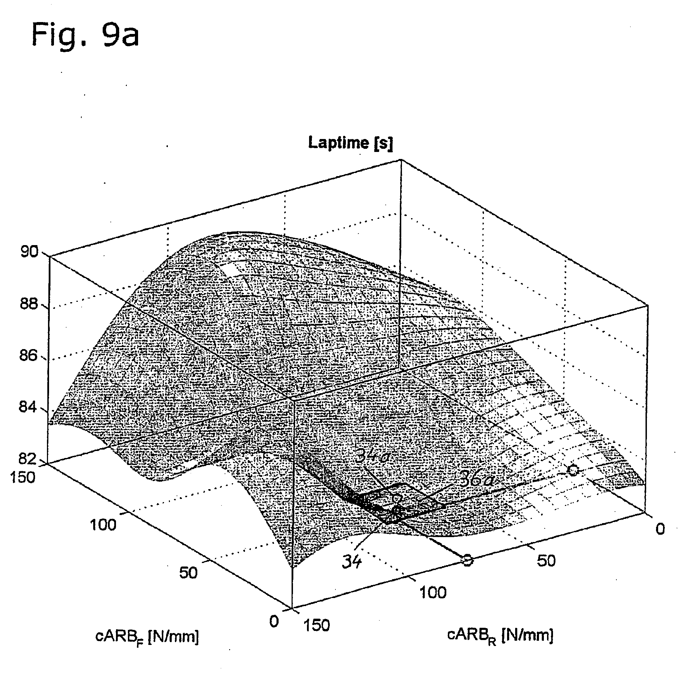

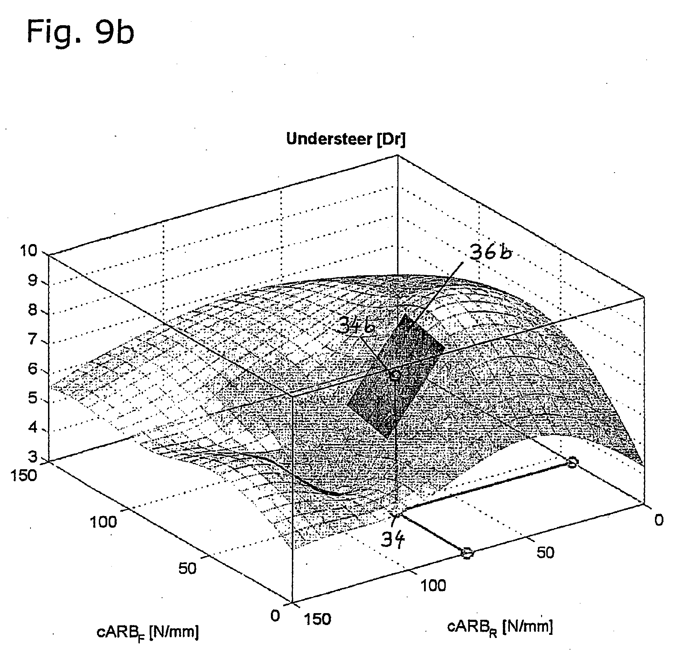

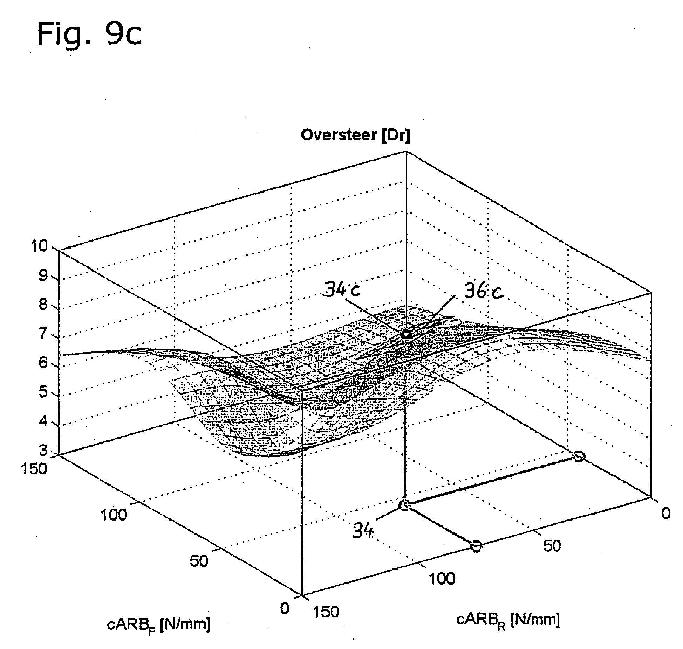

Es ist auch möglich, einen Bereich anzugeben, in dem das linearisierte Metamodell mit vorgegebener Genauigkeit anwendbar ist. Solche Bereiche 36a, 36b und 36c sind in den Fig. 9a, 9b und 9c dargestellt. Zur Ermittlung dieser Bereiche 36a, 36b und 36c muss eine Betrachtung zweiter Ordnung unter Berücksichtigung der erforderlichen Genauigkeit angestellt werden.

Das hier dargestellte Optimierungsverfahren erfordert wie oben angedeutet keine vollständige Kenntnis der komplizierten nichtlinearen Funktionen, die die fiktiven Messwerte im Abhängigkeit von den Einstellparametern angeben und die nur durch Durchführung von Simulationsläufen näherungsweise gewonnen werden können. Bei dem vereinfachten Modell mit zwei Einstellparametern wäre eine Gesamterfassung durchaus denkbar, bei einem realen Modell mit über hundert Einstellparametern ist dies praktisch unmöglich, da der Rechenaufwand exponentiell ansteigt. Das erfindungsgemäße Verfahren bietet hier eine praktikable Lösung.

Die vorliegende Erfindung ermöglicht es, die Fahrzeugabstimmung durch Anwendung von Simulationsverfahren zu beschleunigen und qualitativ zu verbessern.

## Patentansprüche

1. Verfahren zur Optimierung von Fahrzeugen und von Motoren zum Antrieb solcher Fahrzeuge mit folgenden Schritten:

   - Durchführen von Messungen aus dem realen Betrieb des Fahrzeuges (10) auf der Straße oder einem Rollenprüfstand oder des Motors (21) auf einem Motorenprüfstand (19);
   - Parametrisieren eines Simulationsmodells (11), das das Fahrzeug (10) bzw. den Motor (21) abbildet,

   **dadurch gekennzeichnet, dass** rechnerisch eine Prognose über die durch die Messungen erzielten Messwerte ermittelt wird und dass weiters folgende Schritte ausgeführt werden:

   - Simulation des Fahrzeuges (10) unter Verwendung des Simulationsmodells (11), wobei auch mindestens ein Fahrbarkeitsindex (DR, Oversteer, Understeer) berechnet wird, der sich aufgrund einer empirisch ermittelten Funktion aus mehreren Messwerten ergibt und der die Fahrbarkeit des Fahrzeuges (10) in einem bestimmten Fahrzustand angibt;
   - Optimierung der Einstellung des Fahrzeuges (10) während der obigen Simulation, wobei mindestens ein Fahrbarkeitsindex (DR, Oversteer, Understeer) in die Zielfunktion oder die Randbedingungen der Optimierung eingeht.

2. Verfahren nach Anspruch 1, **dadurch gekennzeichnet, dass** ein Fahrermodell (13) vorgesehen ist, das das Verhalten des Fahrers modelliert und die vom Fahrer beeinflussbaren Größen (F) in Abhängigkeit vom Fahrzustand berechnet.

3. Verfahren nach Anspruch 2, **dadurch gekennzeichnet, dass** in das Fahrermodell (13) mindestens ein Fahrbarkeitsindex (DR, Oversteer, Understeer) als Eingangsgröße eingeht.

4. Verfahren nach einem der Ansprüche 2 oder 3, **dadurch gekennzeichnet, dass** das Fahrermodell (13) anhand von mindestens einem Fahrerbewertungsindex parametrisiert wird, der sich aufgrund einer empirisch ermittelten Funktion aus mehreren Messwerten ergibt und der das Fahrverhalten des betreffenden Fahrers in einem bestimmten Fahrzustand bewertet.

5. Verfahren nach einem der Ansprüche 1 bis 4, **dadurch gekennzeichnet, dass** beim Parametrisieren des Simulationsmodells (11) mindestens ein Fahrbarkeitsindex (DR, Oversteer, Understeer) verwendet wird, der sowohl aus den Messungen aus dem realen Betrieb, als auch aus dem Simulationsmodell ermittelt wird.

6. Verfahren nach einem der Ansprüche 1 bis 5, **dadurch gekennzeichnet, dass** die Messungen des realen Betriebs unter der teilweisen Verwendung von Simulationsmodellen (11) durchgeführt werden, wobei einzelne Hardware-Komponenten einem realen Betrieb unterworfen werden, während andere Hardware-Komponenten durch Simulationsmodelle ersetzt werden.

7. Verfahren nach einem der Ansprüche 1 bis 6, **dadurch gekennzeichnet, dass** nach der Durchführung der Messungen aus dem realen Betrieb des Fahrzeugs (10) Änderungen am Fahrzeug (10) definiert werden und das Simulationsmodell (11) auf Basis des geänderten Fahrzeugs (10) erstellt wird.

8. Verfahren nach einem der Ansprüche 1 bis 7, **dadurch gekennzeichnet, dass** die Optimierung im Zuge der Simulation durchgeführt wird, indem ausgehend von einer Anfangskonfiguration von Einstellparametern (E) ein Simulationszyklus mit einer Mehrzahl von Simulationsläufen durchgeführt wird, in denen ein vorbestimmter, im Wesentlichen identischer Fahrzyklus durchlaufen wird, während die Einstellparameter (E) variiert werden, um den Einfluss der Einstellparameter (E) auf die Zielfunktion und die Randbedingungen zu ermitteln.

9. Verfahren nach Anspruch 8, **dadurch gekennzeichnet, dass** auf der Basis der Ergebnisse des Simulationszyklus ein erstes Metamodell erstellt wird, das den Einfluss der Einstellparameter (E) auf die Zielfunktion und die Randbedingungen abbildet, danach auf der Basis des Metamodells ein erster Optimierungsschritt durchgeführt wird, um eine erste Optimalkonfiguration von Einstellparametern (E) zu bestimmen, worauf ausgehend von dieser ersten Optimalkonfiguration von Einstellparametern (E) mindestens ein weiterer Simulationszyklus durchgeführt wird, um ein weiteres Metamodell zu erstellen.

10. Verfahren nach Anspruch 9, **dadurch gekennzeichnet, dass** die Metamodelle lineare Modelle sind.

11. Verfahren nach Anspruch 9, **dadurch gekennzeichnet, dass** die Metamodelle Modelle sind, bei denen die Einstellparameter (E) in die Zielfunktion und die Randbedingungen teilweise linear und teilweise quadratisch eingehen.

12. Verfahren nach einem der Ansprüche 9 bis 11, **dadurch gekennzeichnet, dass** die Metamodelle algebraisch in eine in Hinblick auf die Einstellparameter (E) explizite Darstellung gebracht werden.

13. Verfahren nach einem der Ansprüche 1 bis 12, **dadurch gekennzeichnet, dass** die Zielfunktion eine Rundenzeit ist, die das Fahrzeug für das Durchfahren eines vorbestimmten Kurzes bzw. Kursabschnitts benötigt.

14. Verfahren nach einem der Ansprüche 1 bis 12, **dadurch gekennzeichnet, dass** die Zielfunktion ein Gesamt-Fahrbarkeitsindex ist, der das Fahrverhalten des Fahrzeugs global beschreibt.

15. Verfahren nach einem der Ansprüche 1 bis 12, **dadurch gekennzeichnet, dass** die Zielfunktion ein Kraftstoffverbrauchswert ist, der die Kraftstoffmenge angibt, die das Fahrzeug für das Durchfahren eines vorbestimmten Kurses benötigt.

16. Verfahren nach einem der Ansprüche 1 bis 14, **dadurch gekennzeichnet, dass** Randbedingungen zumindest teilweise Fahrbarkeitsindizes sind, die das Verhalten des Fahrzeugs in Teilbereichen eines Simulationslaufes abbilden, wobei insgesamt alle Teilbereiche des Simulationslaufes abgedeckt sind.

17. Verfahren nach einem der Ansprüche 1 bis 16, **dadurch gekennzeichnet, dass** eine modellbasierte Optimierungsstrategie für das Parametrisieren des Simulationsmodells (11) eingesetzt wird.

18. Verfahren nach einem der Ansprüche 1 bis 16, **dadurch gekennzeichnet, dass** eine erfahrungsorientierte Optimierungsstrategie für das Parametrisieren des Simulationsmodells (11) eingesetzt wird.

**19.** Verfahren nach einem der Ansprüche 1 bis 18, **dadurch gekennzeichnet, dass** eine modellbasierte Optimierungsstrategie für das Optimieren der Einstellung des Fahrzeugs (10) eingesetzt wird.

**20.** Verfahren nach einem der Ansprüche 1 bis 18, **dadurch gekennzeichnet, dass** eine erfahrungsorientierte Optimierungsstrategie für das Optimieren der Einstellung des Fahrzeugs (10) eingesetzt wird.

**21.** Verfahren nach einem der Ansprüche 1 bis 20, **dadurch gekennzeichnet, dass** nach einer anfänglichen Erstellung eines Simulationsmodells während des realen Betriebs des Fahrzeugs das Parametrisieren eines Simulationsmodells (11) Simulation des Fahrzeuges (10) unter Verwendung des Simulationsmodells (11) laufend in Echtzeit erfolgt.

**22.** Verfahren nach Anspruch 21, **dadurch gekennzeichnet, dass** die Optimierung der Einstellung des Fahrzeuges (10) laufend in Echtzeit erfolgt und Änderungen in den Einstellparametern durchgeführt werden.

**23.** Verfahren nach einem der Ansprüche 1 bis 22, **dadurch gekennzeichnet, dass** Änderungen der Einstellparameter (E) des Fahrzeugs automatisch durchgeführt werden.


**Claims**

**1.** A method for optimizing vehicles and engines for driving such vehicles, comprising the following steps:

- performance of measurements during real operation of the vehicle (10) on the road or on a roller-type test stand, or of the engine (21) on an engine test stand (19);
- parameterizing a simulation model (11) representative of the vehicle (10) or engine (21),

**characterized in that** arithmetically a prediction of the measured values by means of said measurements is obtained and that further the following steps are conducted:

- simulation the vehicle (10) by using the simulation model (11), with at least one drivability index (DR, Oversteer, Understeer) being additionally calculated which is obtained from several measured values based on an empirically determined function and indicates the drivability of a vehicle (10) in a specific driving mode;
- optimizing the settings of the vehicle (10) during said simulation, with at least one drivability index (DR, Oversteer, Understeer) being entered into the target function or boundary conditions of the optimization.

**2.** A method according to claim 1, **characterized in that** a driver model (13) is provided which models driver behavior and calculates the variables (F) influenced by the driver depending on the driving state.

**3.** A method according to claim 2, **characterized in that** at least one drivability index (DR, Oversteer, Understeer) is included as an input variable in the driver model (13).

**4.** A method according to one of the claims 2 or 3, **characterized in that** the driver model (13) is parameterized on the basis of at least one driver evaluation index which is obtained on the basis of an empirically determined function from several measured values and which evaluates the driving behavior of the respective driver in a respective driving state.

**5.** A method according to one of the claims 1 to 4, **characterized in that** at least one drivability index (DR, Oversteer, Understeer) is used in the parameterization of the simulation model (11), which drivability index is determined both from the measurements from real operation as well as from the simulation model.

**6.** A method according to one of the claims 1 to 5, **characterized in that** the measurements of real operation are performed under the partial use of simulation models (11), with individual hardware components being subjected to real operation, whereas other hardware components are replaced by simulation models.

**7.** A method according to one of the claims 1 to 6, **characterized in that** changes on the vehicle (10) are defined after the performance of the measurements from the real operation of the vehicle (10) and the simulation model (11) is prepared on the basis of the changed vehicle (10).

**8.** A method according to one of the claims 1 to 7, **characterized in that** the optimization is carried out in the course of the simulation, such that starting from an initial configuration of setting parameters (E) a simulation cycle is performed with a plurality of simulation runs in which a predetermined, substantially identical driving cycle is passed through while the setting parameters (E) are varied in order to determine the influence of the setting parameters (E) on the target function and the boundary conditions.

9. A method according to claim 8, **characterized in that** a first meta model is prepared on the basis of the results of the simulation cycle, which first meta model reflects the influence of the setting parameters (E) on the target function and the boundary conditions, thereafter a first optimization step is performed on the basis of the meta model in order to determine a first optimal configuration of setting parameters (E), whereupon starting from this first optimal configuration of setting parameters (E) at least one further simulation cycle is performed in order to prepare a further meta model.

10. A method according to claim 9, **characterized in that** the meta models are linear models.

11. A method according to claim 9, **characterized in that** the meta models are models in which the setting parameters (E) enter the target function and the boundary conditions in a partly linear manner and in a partly quadratic manner.

12. A method according to one of the claims 9 to 11, **characterized in that** the meta models are brought algebraically to a representation which is explicit with respect to the setting parameters (E).

13. A method according to one of the claims 1 to 12, **characterized in that** the target function is a lap time which the vehicle requires for covering a predetermined track or section of a track.

14. A method according to one of the claims 1 to 12, **characterized in that** the target function is an overall drivability index which globally describes the driving behavior of the vehicle.

15. A method according to one of the claims 1 to 12, **characterized in that** the target function is a fuel consumption value which states the fuel quantity which the vehicle requires for covering a predetermined track.

16. A method according to one of the claims 1 to 14, **characterized in that** the boundary conditions are at least partly drivability indexes which reflect the behavior of the vehicle in partial areas of the simulation run, with all partial areas of the simulation run being covered in their entirety.

17. A method according to one of the claims 1 to 16, **characterized in that** a model-based optimization strategy is used for the parameterization of the simulation model (11).

18. A method according to one of the claims 1 to 16, **characterized in that** an experience-oriented optimization strategy is used for the parameterization of the simulation model (11).

19. A method according to one of the claims 1 to 18, **characterized in that** a model-based optimization strategy is used for the optimization of the setting of the vehicle (10).

20. A method according to one of the claims 1 to 18, **characterized in that** an experience-oriented optimization strategy is used for the optimization of the setting of the vehicle (10).

21. A method according to one of the claims 1 to 20, **characterized in that** after an initial preparation of a simulation model during the real operation of the vehicle the parameterization of a simulation model (11) of the vehicle (10) occurs by using the simulation model (11) continuously in real time.

22. A method according to claim 21, **characterized in that** the optimization of the setting of the vehicle (10) is performed continuously in real time and changes are made to the setting parameters.

23. A method according to one of the claims 1 to 22, **characterized in that** changes to the setting parameters (E) of the vehicle are made automatically.

**Revendications**

1. Procédé d'optimisation de véhicules et de moteurs pour l'entraînement de tels véhicules, comprenant les étapes suivantes :

   - Exécution de mesures à partir du fonctionnement réel du véhicule (10) sur la route ou à partir d'un banc d'essai à rouleaux, ou du moteur (21) sur un banc d'essai de moteur (19) ;
   - Paramétrage d'un modèle de simulation (11), reproduisant le véhicule (10) ou le moteur (21),

   **Caractérisé en ce que**, par calcul, on détermine un pronostic au sujet des valeurs de mesure obtenues par les mesures et **en ce qu'**en outre les étapes suivantes sont effectuées :

   - Simulation du véhicule (10) en utilisant le modèle de simulation (11), sachant qu'également au moins un indice de mobilité (DR, survirage, sous-virage) est calculé, résultant de plusieurs valeurs de mesure, en se basant sur une fonction déterminée de façon empirique, et qui indique la mobilité du véhicule (10) dans un état de roulage déterminé,
   - Optimisation du réglage du véhicule (10) pendant la simulation ci-dessus, sachant qu'au moins un indice de mobilité (DR, survirage, sous-virage) est introduit dans la fonction cible ou les conditions aux limites de l'optimisation.

2. Procédé selon la revendication 1, **caractérisé en ce qu'**un modèle de conducteur (13) est prévu, modélisant le comportement du conducteur, et les grandeurs (F), susceptibles d'être influencées par le conducteur, sont calculées en fonction de l'état de roulage.

3. Procédé selon la revendication 2, **caractérisé en ce que**, dans le modèle de conducteur, est introduit en tant que grandeur d'entrée au moins un indice de mobilité (DR, survirage, sous-virage).

4. Procédé selon l'une des revendications 2 ou 3, **caractérisé en ce que** le modèle de conducteur (13) est paramétré à l'aide d'au moins un indice d'évaluation de conducteur, qui est obtenu à partir de plusieurs valeurs de mesure, en se basant sur une fonction déterminée empiriquement, et qui évalue le comportement en roulage du conducteur concerné en un état de roulage déterminé.

5. Procédé selon l'une des revendications 1 à 4, **caractérisé en ce que**, lors du paramétrage du modèle de simulation (11), au moins un indice de mobilité (DR, survirage, sous-virage) est utilisé, déterminé tant à partir des mesures issues du fonctionnement réel qu'également déterminé à partir de la simulation.

6. Procédé selon l'une des revendications 1 à 5, **caractérisé en ce que** les mesures du fonctionnement réel sont effectuées sous utilisation partielle de modèles de simulation (11), sachant que des composants physiques individuels sont soumis à un fonctionnement réel, tandis que d'autres composants physiques sont remplacés par des modèles de simulation.

7. Procédé selon l'une des revendications 1 à 6, **caractérisé en ce que**, après avoir effectué les mesures, des modifications sur le véhicule (10) sont définies à partir du fonctionnement réel du véhicule (10), et le modèle de simulation (11) est établi sur la base du véhicule (10) modifié.

8. Procédé selon l'une des revendications 1 à 7, **caractérisé en ce que** l'optimisation est effectuée au cours de la simulation, **en ce que**, en partant d'une configuration initiale des paramètres de réglage (E), un cycle de simulation avec un grand nombre de déroulements de simulation est effectué, dans lesquels un cycle de roulage, sensiblement identique, prédéterminé, est parcouru, tandis que les paramètres de réglage (E) sont modifiés pour déterminer l'influence des paramètres de réglage (E) sur la fonction cible et les conditions aux limites.

9. Procédé selon la revendication 8, **caractérisé en ce que**, sur la base des résultats du cycle de simulation, est établi un premier métamodèle, qui reproduit l'influence des paramètres de réglage (E) sur la fonction cible et les conditions aux limites, ensuite une première étape d'optimisation est exécutée sur la base du métamodèle, pour déterminer une première configuration optimale de paramètres de réglage (E), à la suite de quoi, en partant de cette première configuration optimale des paramètres de réglage (E), au moins un autre cycle de simulation est effectué pour établir un autre métamodèle.

**10.** Procédé selon la revendication 9, **caractérisé en ce que** les métamodèles sont des modèles linéaires.

**11.** Procédé selon la revendication 9, **caractérisé en ce que** les métamodèles sont des modèles pour lesquels les paramètres de réglage (E), dans la fonction cible, et les conditions aux limites, sont de nature linéaire et partiellement quadratique.

**12.** Procédé selon l'une des revendications 9 à 11, **caractérisé en ce que** les métamodèles sont placés algébriquement en une représentation explicite, eu égard aux paramètres de réglage (E).

**13.** Procédé selon l'une des revendications 1 à 12, **caractérisé en ce que** la fonction cible est un temps au tour, que demande le véhicule pour effectuer un parcours ou un tronçon de parcours prédéterminé.

**14.** Procédé selon l'une des revendications 1 à 12, **caractérisé en ce que** la fonction cible est un indice de mobilité global, décrivant globalement le comportement en roulage du véhicule.

**15.** Procédé selon l'une des revendications 1 à 12, **caractérisé en ce que** la fonction cible est une valeur de consommation de carburant, indiquant la quantité de carburant dont a besoin le véhicule pour parcourir un parcours prédéterminé.

**16.** Procédé selon l'une des revendications 1 à 14, **caractérisé en ce que** des conditions aux limites sont des indices de mobilité au moins partiels, qui reproduisent le comportement du véhicule dans des zones partielles d'un parcours de simulation, sachant que toutes les zones partielles du parcours de simulation sont couvertes.

**17.** Procédé selon l'une des revendications 1 à 16, **caractérisé en ce qu'**une stratégie d'optimisation à base de modèle est utilisée pour le paramétrage du modèle de simulation (11).

**18.** Procédé selon l'une des revendications 1 à 16, **caractérisé en ce qu'**une stratégie d'optimisation orientée expérience est utilisée pour le paramétrage du modèle de simulation (11).

**19.** Procédé selon l'une des revendications 1 à 18 **caractérisé en ce qu'**une stratégie d'optimisation à base de modèle est utilisée pour l'optimisation du réglage du véhicule (10).

**20.** Procédé selon l'une des revendications 1 à 18, **caractérisé en ce qu'**une stratégie d'optimisation orientée expérience est utilisée pour l'optimisation du réglage du véhicule (10).

**21.** Procédé selon l'une des revendications 1 à 20, **caractérisé en ce que**, après construction initiale d'un modèle de simulation, pendant le fonctionnement réel du véhicule, le paramétrage d'un modèle de simulation (11) pour simulation du véhicule (10) s'effectue en temps réel, en continu, en utilisant le modèle de simulation (11).

**22.** Procédé selon la revendication 21, **caractérisé en ce que** l'optimisation du réglage du véhicule (10) s'effectue en temps réel, en continu, et des modifications sont apportées dans les paramètres de réglage.

**23.** Procédé selon l'une des revendications 1 à 22, **caractérisé en ce que** des modifications des paramètres de réglage (E) du véhicule sont effectuées automatiquement.

$$\alpha$$

1. $U_i, E_{io} \rightarrow F_{i(t)}, M_{i(t)}$

2. $U_i, E_{io}, S_{ij} \rightarrow M_{sim_{i}(t)}$

3. $\|M_i - M_{sim_i}\| < \varepsilon$  — N →  4. $S_{ij}$

J

5. $E_{ik}$

6. $U_i, E_{ik} \rightarrow M_{sim_{ik}(t)}$

7. $M_{sim_{ik}(t)} \rightarrow DR_{ik}$

8. opt?  — N

J

$$\omega$$

## Fig.1

Fig.2

# Fig. 3a

## Fig. 3b

Understeer [Dr]

cARB$_F$ [N/mm]

cARB$_R$ [N/mm]

# Fig. 3c

# Fig. 4a

## Fig. 4b

Understeer [Dr]

cARB$_F$ [N/mm]

cARB$_R$ [N/mm]

## Fig. 4c

Oversteer [Dr]

cARB$_F$ [N/mm]

cARB$_R$ [N/mm]

Fig. 5a

## Fig. 5b

# Fig. 5c

## Fig. 6a

## Fig. 6b

# Fig. 6c

# Fig. 7a

# Fig. 7b

# Fig. 7c

## Fig. 8a

## Fig. 8b

**Understeer [Dr]**

35b

cARB_F [N/mm]

cARB_R [N/mm]

## Fig. 8c

Oversteer [Dr]

35c

cARB$_F$ [N/mm]

cARB$_R$ [N/mm]

# Fig. 9a

## Fig. 9b

# Fig. 9c

Oversteer [Dr]

34 c

36 c

34

cARB$_F$ [N/mm]

cARB$_R$ [N/mm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0877309 B
- WO 0032465 A
- US 6434454 B
- EP 0474944 B
- US 6079258 A